# EUROPEAN PATENT SPECIFICATION

(11) **EP 3 513 514 B1**
(45) Date of publication and mention of the grant of the patent: **16.06.2021**
(21) Application number: 17860392.4
(22) Date of filing: 11.10.2017
(51) Int. Cl.: H04B 7/06, H04B 7/08, H04L 27/26, H04W 56/00, H04J 11/00

(54) **METHOD AND APPARATUS FOR HANDLING SYNCHRONIZATION SIGNAL BLOCK IN MOBILE COMMUNICATIONS**
VERFAHREN UND VORRICHTUNG ZUR HANDHABUNG EINES SYNCHRONISATIONSSIGNALBLOCKS IN DER MOBILKOMMUNIKATION
PROCÉDÉ ET APPAREIL DE GESTION DE BLOC DE SIGNAL DE SYNCHRONISATION DANS DES COMMUNICATIONS MOBILES

(30) Priority: 11.10.2016 US 201662406538 P
(43) Date of publication of application: 24.07.2019
(73) Proprietor: MEDIATEK INC., Hsin-Chu 300 (TW)
(72) Inventor: GUEY, Jiann-Ching, Hsinchu City 300 (TW); CHEN, Tao, Beijing 100015 (CN); LIN, Yu-Chuan, New Taipei City (TW); YANG, Weidong, San Diego California 92130 (US)
(74) Representative: Hoefer & Partner Patentanwälte mbB
(86) International application number: PCT/CN2017/105681
(87) International publication number: WO 2018/068723

(56) References cited:
- US-A1- 2010 118 839
- US-A1- 2016 142 241
- NTT DOCOMO ET AL: "Discussion on mobility measurement design for NR", 3GPP DRAFT; R1-1610075_DISCUSSION ON MOBILITY MEASUREMENT DESIGN FOR NR_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , vol. RAN WG1, no. Lisbon, Portugal; 20161010 - 20161014 9 October 2016 (2016-10-09), XP051150100, Retrieved from the Internet: URL:http://www.3gpp.org/ftp/Meetings_3GPP_ SYNC/RAN1/Docs/ [retrieved on 2016-10-09]
- NTT DOCOMO ET AL: "Discussion on initial access design for NR", 3GPP DRAFT; R1-1610073_DISCUSSION ON INITIAL ACCESS DESIGN FOR NR_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG1, no. Lisbon, Portugal; 20161010 - 20161014 9 October 2016 (2016-10-09), XP051150098, Retrieved from the Internet: URL:http://www.3gpp.org/ftp/Meetings_3GPP_ SYNC/RAN1/Docs/ [retrieved on 2016-10-09]
- NTT DOCOMO ET AL: "Design for RACH procedure for NR", 3GPP DRAFT; R1-1610057 RACH PROCEDURE FOR NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Lisbon, Portugal; 20161010 - 20161014 9 October 2016 (2016-10-09), XP051150082, Retrieved from the Internet: URL:http://www.3gpp.org/ftp/Meetings_3GPP_ SYNC/RAN1/Docs/ [retrieved on 2016-10-09]
- INTEL CORPORATION NTT DOCOMO ZTE ZTE MICROELECTRONICS ETRI: "WF on the unified structure of DL sync signal", 3GPP DRAFT; R1-1610522_WF_UNIFIED_DL_SS_STRUCT_V3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Lisbon, Portugal; 20161010 - 20161014 10 October 2016 (2016-10-10), XP051160149, Retrieved from the Internet: URL:http://www.3gpp.org/ftp/tsg_ran/WG1_RL 1/TSGR1_86b/Docs/ [retrieved on 2016-10-10]
- MEDIATEK INC: "TDM Based Unified SS Block Design for Both Above and Below 6 GHz", 3GPP DRAFT; R1-1700159_TDM_BASED_UNIFIED_SS_BLOCK_DESI GN_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, Washington, USA,; 20170116 - 20170120 16 January 2017 (2017-01-16), XP051207701, Retrieved from the Internet: URL:http://www.3gpp.org/ftp/Meetings_3GPP_ SYNC/RAN1/Docs/ [retrieved on 2017-01-16]
- CATT: 'NR Initial Access Procedure with multi-stage synchronization signals' 3GPP TSG RAN WG1 NR AD HOC MEETING R1-1700177 10 January 2017, pages 1 - 4, XP051202682
- ERICSSON: 'Sync signal options for active mode mobility RS' 3GPP TSG RAN WGI NR AD HOC MEETING R11-1700302 10 January 2017, pages 1 - 3, XP051202781
- CONVIDA WIRELESS: 'Synchronization Signal Burst Design for Initial Access' 3GPP TSG RAN WG1 MEETING #87 R1 -1613007 05 November 2016, pages 1 - 3, XP051190633

## Description

### TECHNICAL FIELD

The present disclosure is generally related to mobile communications and, in particular, to synchronization signal block handling with respect to user equipment and network apparatus in mobile communications. More particularly, the present invention relates to a method according to the pre-characterizing part of claim 1 and a method according to the pre-characterizing part of claim 8. Such methods are shown in NTT DOCOMO et al.: "Discussion on mobility measurement design for NR".

### BACKGROUND

NTT DOCOMO et al.: "Discussion on initial access design for NR" discloses that in a sub-frame, at least one of the primary synchronization signal, PSS, and the secondary synchronization signal, SSS, is separated by only one orthogonal frequency-division multiplexing, OFDM, symbol occupied by physical broadcast channel, PBCH.

NTT DOCOMO et al.: "Design for RACH procedure for NR" discloses that in order for a user equipment, UE, to measure transmitting/receiving-beam, UE-beam sweeping for down link, DL, signals/channels is needed.

INTEL CORPORATION et al.: "WF on the unified structure of DL sync signal" discloses that PSS, SSS and/or PBCH can be transmitted within a synchronization signal, SS, block.

Unless otherwise indicated herein, approaches described in this section are not prior art to the claims listed below and are not admitted as prior art by inclusion in this section.

In the Long-Term Evolution (LTE) communication system, synchronization signals are transmitted from base stations to user equipment (UE). The synchronization signals may be used by the UE for performing time domain and frequency domain synchronization. The synchronization signals may also be used by the UE for searching and identifying the presence of the base stations. The base station may transmit the synchronization signals in a synchronization signal block. The synchronization signal blocks should be periodically and stably transmitted for the UE to perform an initial access process.

In developing new generation communication systems (e.g., a 5th Generation (5G) network, or a New Radio (NR) network), high frequency bands (e.g., Millimeter Wave) transmission may become more popular and necessary for high data rate requirements. However, in high frequency band transmission, it is unavoidable to use antenna array for transmitting signals. One character of the antenna array is that the radiation beam of which is narrow and only points to a specific direction at one time. It is very difficult for the base station to cover multiple UEs in single transmission unless those multiple UEs are located in very close proximity. To handle this problem, a sophisticated idea of managing/controlling the beam to cover the multiple devices scattered in all directions is developed. The management/control mechanism should be well designed and efficiently performed in new generation communication networks.

Accordingly, it is important for the UE to properly and timely perform the beam management to quickly get good transmission quality with the base station. Therefore, in view of the requirements, it would be valuable to perform beam management by using the frequently transmitted synchronization signal blocks.

### SUMMARY

The above-mentioned objectives are achieved by a method according to independent claim 1 and a method according to independent claim 8. The dependent claims define preferred embodiments thereof.

The following summary is illustrative only and is not intended to be limiting in any way. That is, the following summary is provided to introduce concepts, highlights, benefits and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

An objective of the present disclosure is to propose solutions or schemes that address the aforementioned issues with respect to synchronization signal block handling for communication apparatus and network apparatus. In implementations in accordance with the present disclosure, the communication apparatus may receive a synchronization signal block from a network apparatus. The communication apparatus may be able to detect a first synchronization signal and a second synchronization signal in an initial acquisition procedure. The communication apparatus may also perform a beam management procedure according to a reference signal.

In one aspect, a method may involve an apparatus receiving a synchronization signal block (SS block) from a network apparatus. The method may also involve the apparatus detecting a transmission beam of the network apparatus according to the SS block. The SS block may comprise a first synchronization signal, a second synchronization signal and a reference signal for detecting the transmission beam.

In another aspect, a method may involve a network transmitting a synchronization signal block (SS block) in a transmission beam to a user equipment (UE). The method may also involve the network apparatus changing the transmission beam to transmit the SS block. The SS block may comprise a first synchronization signal, a second synchronization signal and a reference signal for the UE to detect the transmission beam.

### BRIEF DESCRIPTION OF THE DRAWINGS

The accompanying drawings are included to provide a further understanding of the disclosure, and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation in order to clearly illustrate the concept of the present disclosure.
FIG. 1 is a diagram depicting an example scenario under schemes in accordance with implementations of the present disclosure.
FIG. 2 is a diagram depicting an example synchronization signal block in accordance with implementations of the present disclosure.
FIG. 3 is a diagram depicting an example allocation of the broadcast channel and the demodulation reference signal in accordance with implementations of the present disclosure.
FIG. 4 is a diagram depicting an example scenario under schemes in accordance with implementations of the present disclosure.
FIG. 5 is a block diagram of an example communication apparatus and an example network apparatus in accordance with an implementation of the present disclosure.
FIG. 6 is a flowchart of an example process in accordance with an implementation of the present disclosure.
FIG. 7 is a flowchart of an example process in accordance with an implementation of the present disclosure.
FIG. 8 is a flowchart of an example process in accordance with an implementation of the present disclosure.
FIG. 9 is a flowchart of an example process in accordance with an implementation of the present disclosure.

### DETAILED DESCRIPTION OF PREFERRED EMBODIMENTS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### Overview

Implementations in accordance with the present disclosure relate to various techniques, methods, schemes and/or solutions pertaining to synchronization signal block handling in mobile communications. According to the present disclosure, a number of possible solutions may be implemented separately or jointly. That is, although these possible solutions may be described below separately, two or more of these possible solutions may be implemented in one combination or another.

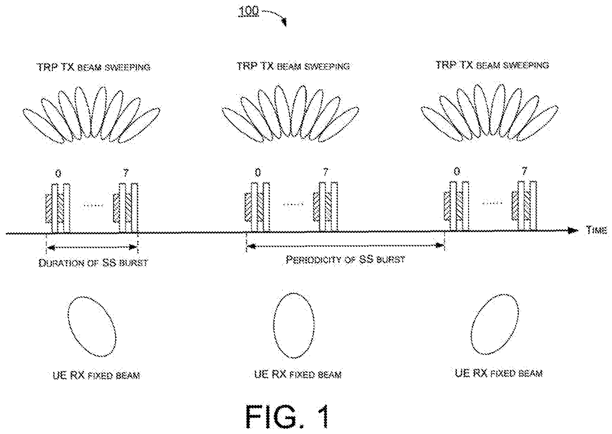

FIG. 1 illustrates an example scenario 100 under schemes in accordance with implementations of the present disclosure. Scenario 100 involves a user equipment (UE) and a network apparatus, which may be part of a wireless network (e.g., a LTE network, a LTE-Advanced network, a LTE-Advanced Pro network, a 5th Generation (5G) network, a New Radio (NR) network or an Internet of Things (loT) network). The network apparatus (e.g., base station, eNB or gNB) is able to transmit a synchronization signal block (SS block) to the UE. The SS block is transmitted for the UE to synchronize timing and frequency boundary of downlink signals, and to identify the presence and the direction of the network apparatus. The SS block may be transmitted periodically in time and repeatedly in different directions.

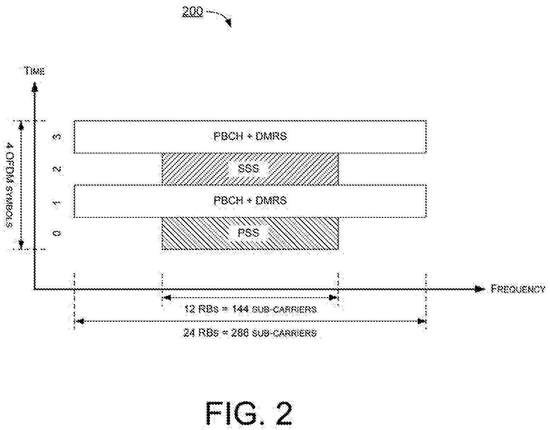

FIG. 2 illustrates an example synchronization signal block in accordance with implementations of the present disclosure. The SS block may occupy a certain number of contiguous sub-carriers and a certain number of contiguous orthogonal frequency-division multiplexing (OFDM) symbols. For example, as showed in FIG. 2, the SS block occupies 288 sub-carriers in frequency domain and 4 OFDM symbols in time domain. The 288 sub-carriers are equal to 24 resource blocks where each resource block comprises 12 sub-carriers. A sub-carrier in one OFDM symbol is referred to as a resource element (RE). The SS block may comprise a primary synchronization signal (PSS). The PSS may occupy a certain number of sub-carriers (e.g., 144 sub-carrier) and a certain number of OFDM symbols (e.g., 1 OFDM symbol). The PSS may be placed in the first OFDM symbol of the SS block. The SS block may further comprise a secondary synchronization signal (SSS). The PSS may occupy a certain number of sub-carriers and a certain number of OFDM symbols. The number of the sub-carriers occupied by the SSS may be equal to, less than or greater than the number of the sub-carriers occupied by the PSS. The number of the OFDM symbols occupied by the SSS may be equal to, less than or greater than the number of the OFDM symbols occupied by the PSS. The SSS may be placed in the third OFDM symbol of the SS block and does not occupy any RE of the first OFDM symbol of the SS block. The PSS and the SSS may be separated by one or more OFDM symbols.

The SS block may further comprise a broadcast channel (e.g., physical broadcast channel (PBCH)) and its associated demodulation reference signal (DMRS). The DMRS is used for the UE to demodulate the PBCH signals. The broadcast channel and the DMRS may occupy a plurality of sub-carriers and a plurality of OFDM symbols of the SS block. For example, the broadcast channel and the DMRS may occupy 288 sub-carriers in one OFDM symbol and may occupy two OFDM symbols of the SS block. The two OFDM symbols occupied by the broadcast channel and the DMRS may be further separated by one OFDM symbol or by at least one of the PSS and the SSS.

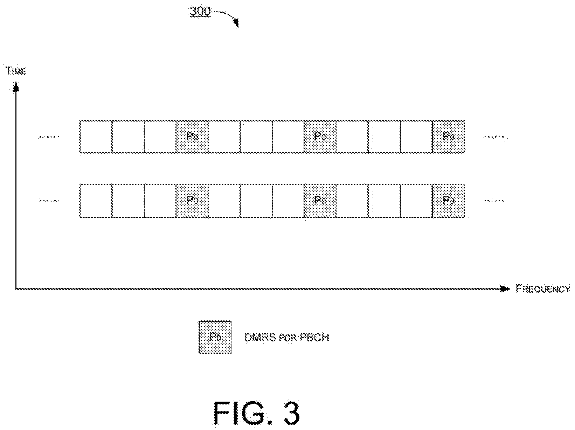

FIG. 3 illustrates an example allocation of the broadcast channel and the demodulation reference signal in accordance with implementations of the present disclosure. The DMRS associated the broadcast channel may occupy a plurality of REs in one OFDM symbol of the SS block. For example, one DMRS may be allocated in every four REs in one OFDM symbol. The REs denoted as P0 represent the DMRS for the PBCH.

Referring to FIG. 1, the network apparatus may be configured to repeatedly transmit the SS block in a plurality of antenna beam directions. Specifically, the network apparatus may use an antenna array to transmit downlink signals. The transmission beam of the antenna array may point to a certain direction and may only cover a narrow area. Since the transmission beam of the antenna array may not cover a wide area at the same time, if there is a UE around the network apparatus and the network apparatus is not aware of the location of the UE, the network apparatus may need to transmit the SS block in different beam directions sequentially to cover a wide area for the UE to search the network apparatus. The network apparatus may be configured to perform transmission/reception point (TRP) transmission (TX) beam sweeping in one SS burst. For example, the network apparatus may transmit the SS blocks in 8 different TX beam directions to cover a sector of 120 degree in one SS burst. The duration of the SS burst may be less than, equal to or greater than 1 millisecond. For each TX beam direction, the network apparatus may transmit one SS block. Thus, the network apparatus may transmit 8 contiguous SS block in one SS burst. The network apparatus may further be configured to transmit the SS burst periodically. For example, the network apparatus may transmit one SS burst in a periodicity of 20 millisecond.

At UE side, when the UE is turned on, the UE may try to search SS blocks from a network apparatus and detect a transmission beam of the network apparatus according to the SS blocks. The UE may be configured to perform an initial acquisition procedure. Specifically, in the initial acquisition procedure, the UE may be configured to receive and detect the PSS and the SSS within the SS blocks. The combination of the PSS and the SSS may give a unique identification of the network apparatus. If the PSS and the SSS are received by the UE, the UE is able to identify and find the direction of the network apparatus. In the initial acquisition procedure, the UE may be configured to use a fixed beam for UE reception (RX). If the UE fails to detect or receive the PSS and the SSS, the UE may be configured to change its beam direction and use a different receiving beam to search again. As showed in lower figure of FIG. 1, the UE may be configured to change its RX fixed beam in different directions to search the SS blocks.

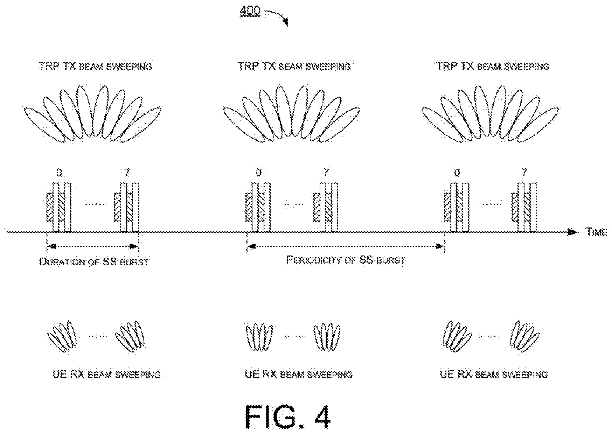

After the initial access procedure, the UE may further be configured to perform a beam management procedure according to the received SS blocks. The beam management procedure is performed for the UE to find a best beam pair link (BPL) between the UE and the network apparatus. FIG. 4 illustrates an example scenario 400 under schemes in accordance with implementations of the present disclosure. In the beam management procedure, the UE may be configured to measure a channel quality or measure reference signal received power (RSRP) for each received SS block. Specifically, the UE may be configured to receive the reference signals (e.g., DMRS) in the SS blocks. The UE may be configured to perform channel state information (CSI) measurement or RSRP measurement based on the DMRS. For example, the network apparatus may transmit 8 SS blocks in 8 different TX beams. The UE may be configured to perform CSI measurement to measure the channel quality for each TX beam. The UE may further be configured to perform RX beam sweeping for each of the 8 SS blocks in a SS burst.

As showed in lower figure of FIG. 4, the UE may be configured to change its RX beam to measure a plurality of the reference signals in the SS blocks. Specifically, as illustrated in lower figure of FIG. 2, the PBCH and the DMRS may occupy two OFDM symbols in each SS block. The UE may be configured to measure the DMRS in the second OFDM symbol and change its UE RX beam to measure the DMRS in the fourth OFDM symbol. Similarly, the UE may further be configured to change its UE RX beam to measure the DMRS in the OFDM symbols of each of the 8 SS blocks. After the measurement, the UE may have the channel quality information of each BPL between the UE and the network apparatus. The UE may further transmit the measurement results to the network apparatus. Accordingly, the network apparatus may have the information to determine a best BLP and use a specific TX beam with the best BPL to transmit downlink signal to the UE.

In some implementations, the DMRS and/or the PBCH may carry beam information of the network apparatus. For example, a part of the beam information may be carried by the DMRS and a remaining part of the beam information may be carried by the PBCH. After receiving the DMRS and/or the PBCH, the UE may be able to know the beam information (e.g., beam identity or beam direction) of each TX beam of the network apparatus. The UE may be able to report the measurement results accompany with the beam information to the network apparatus.

In some implementations, two OFDM symbols allocated with the DMRS may be separated by one or more OFDM symbols. In practice, the UE may need a certain time duration to change its RX beam. Therefore, the separation of the OFDM symbols allocated with the DMRS is used to preserve some time for the UE to perform beam switching. Accordingly, the UE may have enough time to sweep its RX beam to measure each OFDM symbol with the DMRS in each SS block.

### Illustrative Implementations

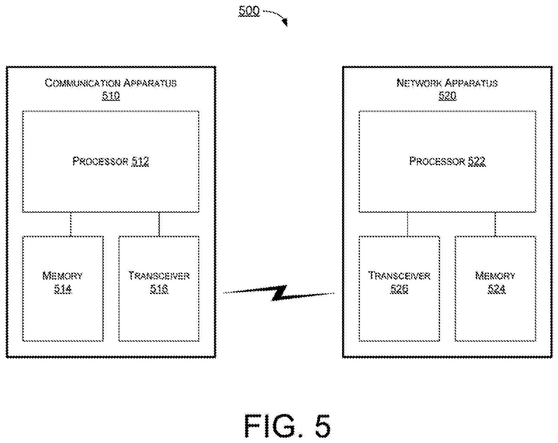

FIG. 5 illustrates an example communication apparatus 510 and an example network apparatus 520 in accordance with an implementation of the present disclosure. Each of communication apparatus 510 and network apparatus 520 may perform various functions to implement schemes, techniques, processes and methods described herein pertaining to synchronization signal block handling with respect to user equipment and network apparatus in wireless communications, including scenarios 100 and 400 described above as well as processes 600 and 700 described below.

Communication apparatus 510 may be a part of an electronic apparatus, which may be a user equipment (UE) such as a portable or mobile apparatus, a wearable apparatus, a wireless communication apparatus or a computing apparatus. For instance, communication apparatus 510 may be implemented in a smartphone, a smartwatch, a personal digital assistant, a digital camera, or a computing equipment such as a tablet computer, a laptop computer or a notebook computer. Communication apparatus 510 may also be a part of a machine type apparatus, which may be an loT apparatus such as an immobile or a stationary apparatus, a home apparatus, a wire communication apparatus or a computing apparatus. For instance, communication apparatus 510 may be implemented in a smart thermostat, a smart fridge, a smart door lock, a wireless speaker or a home control center. Alternatively, communication apparatus 510 may be implemented in the form of one or more integrated-circuit (IC) chips such as, for example and without limitation, one or more single-core processors, one or more multi-core processors, or one or more complex-instruction-set-computing (CISC) processors. Communication apparatus 510 may include at least some of those components shown in FIG. 5 such as a processor 512, for example. Communication apparatus 510 may further include one or more other components not pertinent to the proposed scheme of the present disclosure (e.g., internal power supply, display device and/or user interface device), and, thus, such component(s) of communication apparatus 510 are neither shown in FIG. 5 nor described below in the interest of simplicity and brevity.

Network apparatus 520 may be a part of an electronic apparatus, which may be a network node such as a base station, a small cell, a router or a gateway. For instance, network apparatus 520 may be implemented in an eNodeB in a LTE, LTE-Advanced or LTE-Advanced Pro network or in a gNB in a 5G, NR or loT network. Alternatively, network apparatus 520 may be implemented in the form of one or more IC chips such as, for example and without limitation, one or more single-core processors, one or more multi-core processors, or one or more CISC processors. Network apparatus 520 may include at least some of those components shown in FIG. 5 such as a processor 522, for example. Network apparatus 520 may further include one or more other components not pertinent to the proposed scheme of the present disclosure (e.g., internal power supply, display device and/or user interface device), and, thus, such component(s) of network apparatus 520 are neither shown in FIG. 5 nor described below in the interest of simplicity and brevity.

In one aspect, each of processor 512 and processor 522 may be implemented in the form of one or more single-core processors, one or more multi-core processors, or one or more CISC processors. That is, even though a singular term "a processor" is used herein to refer to processor 512 and processor 522, each of processor 512 and processor 522 may include multiple processors in some implementations and a single processor in other implementations in accordance with the present disclosure. In another aspect, each of processor 512 and processor 522 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 512 and processor 522 is a special-purpose machine specifically designed, arranged and configured to perform specific tasks including power consumption reduction in a device (e.g., as represented by communication apparatus 510) and a network (e.g., as represented by network apparatus 520) in accordance with various implementations of the present disclosure.

In some implementations, communication apparatus 510 may also include a transceiver 516 coupled to processor 512 and capable of wirelessly transmitting and receiving data. In some implementations, communication apparatus510 may further include a memory 514 coupled to processor 512 and capable of being accessed by processor 512 and storing data therein. In some implementations, network apparatus 520 may also include a transceiver 526 coupled to processor 522 and capable of wirelessly transmitting and receiving data. In some implementations, network apparatus 520 may further include a memory 524 coupled to processor 522 and capable of being accessed by processor 522 and storing data therein. Accordingly, communication apparatus 510 and network apparatus 520 may wirelessly communicate with each other via transceiver 516 and transceiver 526, respectively. To aid better understanding, the following description of the operations, functionalities and capabilities of each of communication apparatus 510 and network apparatus 520 is provided in the context of a mobile communication environment in which communication apparatus 510 is implemented in or as a communication apparatus or a UE and network apparatus 520 is implemented in or as a network node of a communication network.

In some implementations, processor 522 may be configured to transmit, via transceiver 526, a synchronization signal block (SS block) to the communication apparatus 510. The SS block is transmitted for the communication apparatus 510 to synchronize timing and frequency boundary of downlink signals, and to identify the presence and the direction of the network apparatus. Processor 522 may be configured to transmit the SS block periodically in time and repeatedly in different directions.

In some implementations, processor 522 may be configured to repeatedly transmit, via transceiver 526, the SS block in a plurality of antenna beam directions. Processor 522 may be configured to use an antenna array to transmit downlink signals. Processor 522 may be configured to perform transmission/reception point (TRP) transmission (TX) beam sweeping in one SS burst. For example, processor 522 may transmit the SS blocks in 8 different TX beam directions to cover a sector of 120 degree in one SS burst. The duration of the SS burst may be less than, equal to or greater than 1 millisecond. For each TX beam direction, processor 522 may transmit one SS block. Thus, processor 522 may transmit 8 contiguous SS block in one SS burst. Processor 522 may further be configured to transmit the SS burst periodically. For example, processor 522 may transmit one SS burst in a periodicity of 20 millisecond.

In some implementations, when communication apparatus 510 is turned on, processor 512 may try to search SS blocks from network apparatus 520 and detect a transmission beam of network apparatus 520 according to the SS blocks. Processor 512 may be configured to perform an initial acquisition procedure. Specifically, in the initial acquisition procedure, processor 512 may be configured to receive and detect the PSS and the SSS within the SS blocks. The combination of the PSS and the SSS may give a unique identification of the network apparatus. If the PSS and the SSS are received by processor 512, processor 512 is able to identify and find the direction of the network apparatus. In the initial acquisition procedure, processor 512 may be configured to use a fixed beam for UE reception (RX). If processor 512 fails to detect or receive the PSS and the SSS, processor 512 may be configured to change its beam direction and use a different receiving beam to search again. Processor 512 may be configured to change its RX fixed beam in different directions to search the SS blocks.

In some implementations, after the initial access procedure, processor 512 may further be configured to perform a beam management procedure according to the received SS blocks. The beam management procedure is performed for processor 512 to find a best beam pair link (BPL) between communication apparatus 510 and network apparatus 520. In the beam management procedure, processor 512 may be configured to measure a channel quality or measure reference signal received power(RSRP) for each received SS block. Specifically, processor 512 may be configured to receive the reference signals (e.g., DMRS) in the SS blocks. Processor 512 may be configured to perform channel state information (CSI) measurement or RSRP measurement based on the DMRS. For example, network apparatus 520 may transmit 8 SS blocks in 8 different TX beams. Processor 512 may be configured to perform CSI measurement to measure the channel quality for each TX beam.

In some implementations, processor 512 may further be configured to change its RX beam to measure a plurality of the reference signals in the SS blocks. Specifically, the PBCH and the DMRS may occupy two OFDM symbols in each SS block. Processor 512 may be configured to measure the DMRS in the second OFDM symbol and change its UE RX beam to measure the DMRS in the fourth OFDM symbol. Similarly, processor 512 may further be configured to change its UE RX beam to measure the DMRS in the OFDM symbols of each of the 8 SS blocks. After the measurement, processor 512 may have the channel quality information of each BPL between communication apparatus 510 and network apparatus 520. Processor 512 may further transmit the measurement results to the network apparatus. Accordingly, processor 522 may have the information to determine a best BLP and use a specific TX beam with the best BPL to transmit downlink signal to communication apparatus 510.

In some implementations, the DMRS and/or the PBCH may carry beam information of the network apparatus. For example, a part of the beam information may be carried by the DMRS and a remaining part of the beam information may be carried by the PBCH. After receiving the DMRS, processor 512 may be able to know the beam information (e.g., beam identity or beam direction) of each TX beam of the network apparatus. Processor 512 may be able to report the measurement results accompany with the beam information to the network apparatus.

In some implementations, processor 522 may be configured to transmit a SS block in a transmission beam to communication apparatus 510. Processor 522 may be further configured to change the transmission beam to transmit the SS block. Processor 522 may schedule the broadcast channel and the DMRS in a plurality of sub-carriers and a plurality of OFDM symbols of the SS block. Processor 522 may further separate two OFDM symbols occupied by the broadcast channel and the DMRS by at least one of the PSS and the SSS. Processor 522 may also separate the PSS and the SSS by at least one OFDM symbol.

### Illustrative Processes

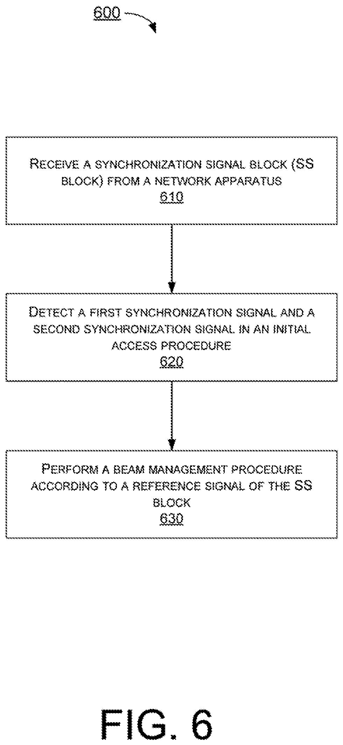

FIG. 6 illustrates an example process 600 in accordance with an implementation of the present disclosure. Process 600 may be an example implementation of scenarios 100 and 400, whether partially or completely, with respect to aperiodic reference signal handling in accordance with the present disclosure. Process 600 may represent an aspect of implementation of features of communication apparatus 510. Process 600 may include one or more operations, actions, or functions as illustrated by one or more of blocks 610, 620 and 630. Although illustrated as discrete blocks, various blocks of process 600 may be divided into additional blocks, combined into fewer blocks, or eliminated, depending on the desired implementation. Moreover, the blocks of process 600 may be executed in the order shown in FIG. 6 or, alternatively, in a different order. Process 600 may be implemented by communication apparatus 510 or any suitable UE or machine type devices. Solely for illustrative purposes and without limitation, process 600 is described below in the context of communication apparatus 510. Process 600 may begin at block 610.

At 610, process 600 may involve communication apparatus 510 receiving a synchronization signal block (SS block) from a network apparatus. Process 600 may proceed from 610 to 620.

At 620, process 600 may involve communication apparatus 510 detect a first synchronization signal and a second synchronization signal in an initial acquisition procedure. Process 600 may proceed from 620 to 630.

At 630, process 600 may involve communication apparatus 510 perform a beam management procedure according to a reference signal of the SS block.

In some implementations, the first synchronization signal is a primary synchronization signal (PSS), the second synchronization signal is a secondary synchronization signal (SSS), and the reference signal is a demodulation reference signal (DMRS). The SS block further comprises a broadcast channel and wherein the DMRS is used for demodulation of the broadcast channel. The broadcast channel and the DMRS occupies a plurality of sub-carriers and a plurality of OFDM symbols of the SS block. The two OFDM symbols occupied by the broadcast channel and the DMRS are separated by at least one of the PSS and the SSS. The PSS and the SSS are separated by at least one OFDM symbol.

In some implementations, process 600 may involve communication apparatus 510 measuring a channel quality based on the reference signal. Process 600 may further involve communication apparatus 510 changing receiving beams to measure a plurality of the reference signals in the SS block.

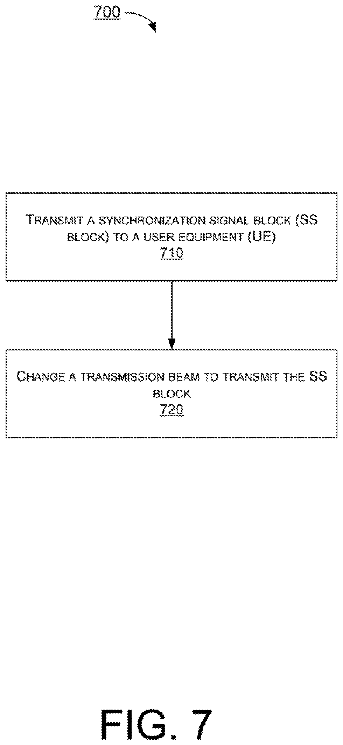

FIG. 7 illustrates an example process 700 in accordance with an implementation of the present disclosure. Process 700 may be an example implementation of scenarios 100 and 400, whether partially or completely, with respect to aperiodic reference signal handling in accordance with the present disclosure. Process 700 may represent an aspect of implementation of features of network apparatus 520. Process 700 may include one or more operations, actions, or functions as illustrated by one or more of blocks 710 and 720. Although illustrated as discrete blocks, various blocks of process 700 may be divided into additional blocks, combined into fewer blocks, or eliminated, depending on the desired implementation. Moreover, the blocks of process 700 may executed in the order shown in FIG. 7 or, alternatively, in a different order. Process 700 may be implemented by network apparatus 520 or any suitable network node. Solely for illustrative purposes and without limitation, process 700 is described below in the context of network apparatus 520. Process 700 may begin at block 710.

At 710, process 700 may involve network apparatus 520 transmitting a synchronization signal block (SS block) in a transmission beam to a user equipment (UE). Process 700 may proceed from 710 to 720.

At 720, process 700 may involve network apparatus 520 changing a transmission beam to transmit the SS block.

In some implementations, the SS block comprises a first synchronization signal, a second synchronization signal and a reference signal for the UE to detect the transmission beam. The first synchronization signal is a primary synchronization signal (PSS), the second synchronization signal is a secondary synchronization signal (SSS), and the reference signal is a demodulation reference signal (DMRS). The SS block further comprises a broadcast channel and wherein the DMRS is transmitted for the UE to demodulate the broadcast channel.

In some implementations, process 700 may involve network apparatus 520 scheduling the broadcast channel and the DMRS in a plurality of sub-carriers and a plurality of OFDM symbols of the SS block. Process 700 may further involve network apparatus 520 separating two OFDM symbols occupied by the broadcast channel and the DMRS by at least one of the PSS and the SSS. Process 700 may also involve network apparatus 520 separating the PSS and the SSS by at least one OFDM symbol.

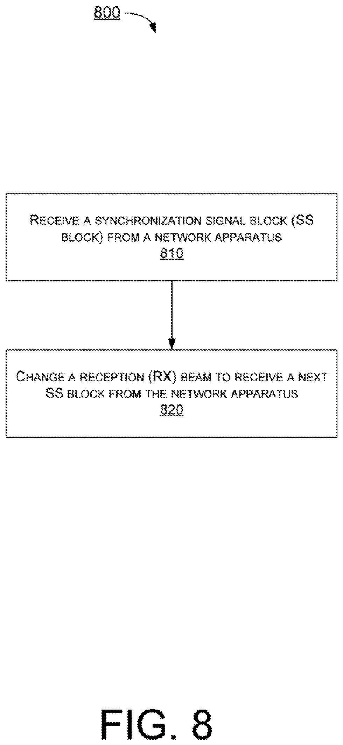

FIG. 8 illustrates an example process 800 in accordance with an implementation of the present disclosure. Process 800 may be an example implementation of scenarios100 and 400, whether partially or completely, with respect to aperiodic reference signal handling in accordance with the present disclosure. Process 800 may represent an aspect of implementation of features of communication apparatus 510. Process 800 may include one or more operations, actions, or functions as illustrated by one or more of blocks 810 and 820. Although illustrated as discrete blocks, various blocks of process 800 may be divided into additional blocks, combined into fewer blocks, or eliminated, depending on the desired implementation. Moreover, the blocks of process 800 may be executed in the order shown in FIG. 8 or, alternatively, in a different order. Process 800 may be implemented by communication apparatus 510 or any suitable UE or machine type devices. Solely for illustrative purposes and without limitation, process 800 is described below in the context of communication apparatus 510. Process 800 may begin at block 810.

At 810, process 800 may involve communication apparatus 510receiving a synchronization signal block (SS block) from a network apparatus. Process 800 may proceed from 810 to 820.

At 820, process 800 may involve communication apparatus 510 changing a reception (RX) beam to receive a next SS block from the network apparatus.

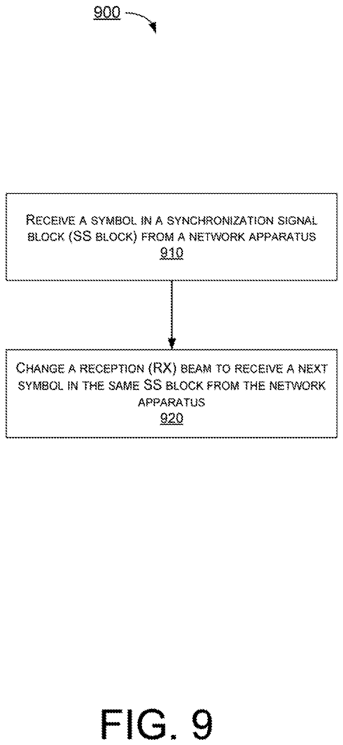

FIG. 9 illustrates an example process 900 in accordance with an implementation of the present disclosure. Process 900 may be an example implementation of scenarios 100 and 400, whether partially or completely, with respect to aperiodic reference signal handling in accordance with the present disclosure. Process 900 may represent an aspect of implementation of features of communication apparatus 510. Process 900 may include one or more operations, actions, or functions as illustrated by one or more of blocks 910 and 920. Although illustrated as discrete blocks, various blocks of process 900 may be divided into additional blocks, combined into fewer blocks, or eliminated, depending on the desired implementation. Moreover, the blocks of process 900 may be executed in the order shown in FIG. 9 or, alternatively, in a different order. Process 900 may be implemented by communication apparatus 510 or any suitable UE or machine type devices. Solely for illustrative purposes and without limitation, process 900 is described below in the context of communication apparatus 510. Process 900 may begin at block 910.

At 910, process 900 may involve communication apparatus 510 receiving a symbol in a synchronization signal block (SS block) from a network apparatus. Process 900 may proceed from 910 to 920.

At 920, process 900 may involve communication apparatus 510 changing a reception (RX) beam to receive a next symbol in the same SS block from the network apparatus.

### Additional Notes

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to", the term "having" should be interpreted as "having at least", the term "includes" should be interpreted as "includes but is not limited to", etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an", e.g., "a" and/or "an" should be interpreted to mean "at least one" or "one or more"; the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations", without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration, and that various modifications may be made without departing from the scope of the present disclosure. Accordingly, the various implementations disclosed herein are not intended to be limiting, with the true scope being indicated by the following claims.

## Claims

1. A method, comprising:
receiving (610), by a processor (512) of an apparatus (510), a synchronization signal block, SS block, from a network apparatus (520);
detecting, by the processor (512) of the apparatus (510), a transmission beam of the network apparatus (520) according to the SS block; and
wherein the SS block comprises a first synchronization signal, a second synchronization signal, reference signals and a broadcast channel for detecting the transmission beam;
wherein the first synchronization signal is a primary synchronization signal, PSS, the second synchronization signal is a secondary synchronization signal, SSS, and the reference signals are demodulation reference signals, DMRS;
**characterized in that**
two orthogonal frequency-division multiplexing, OFDM, symbols occupied by the broadcast channel and the DMRS are separated by at least one of the PSS and the SSS of the same SS block.

2. The method of Claim 1, wherein the DMRS are used for demodulation of the broadcast channel.

3. The method of Claim 2, wherein the broadcast channel and the DMRS occupy a plurality of sub-carriers and a plurality of orthogonal frequency-division multiplexing, OFDM, symbols of the SS block.

4. The method of Claim 1, wherein the PSS and the SSS of the same SS block are separated by one orthogonal frequency-division multiplexing, OFDM, symbol.

5. The method of Claim 1, wherein detecting the transmission beam of the network apparatus (520) further comprises:
detecting (620), by the processor (512) of the apparatus (510), the first synchronization signal and the second synchronization signal in an initial acquisition procedure.

6. The method of Claim 1, wherein detecting the transmission beam of the network apparatus (520) further comprises:
performing (630), by the processor (512) of the apparatus (510), a beam management procedure according to the reference signals,
wherein performing (630) the beam management procedure further comprises:
measuring, by the processor (512) of the apparatus (510), a channel quality based on the reference signals.

7. The method of Claim 6, wherein performing (630) the beam management procedure further comprises:
changing, by the processor (512) of the apparatus (510), receiving beams to measure the reference signals in the SS block.

8. A method, comprising:
transmitting (710), by a processor (522) of a network apparatus (520), a synchronization signal block, SS block, in a transmission beam to a user equipment (510), UE; and
changing (720), by the processor (522) of the network apparatus (520), the transmission beam to transmit a next SS block,
wherein the SS block comprises a first synchronization signal, a second synchronization signal, reference signals and a broadcast channel for the UE (510) to detect the transmission beam;
wherein the first synchronization signal is a primary synchronization signal, PSS, the second synchronization signal is a secondary synchronization signal, SSS, and the reference signals are demodulation reference signals, DMRS;
**characterized in that**
the processor (522) of the network apparatus (520) separates two orthogonal frequency-division multiplexing, OFDM, symbols occupied by the broadcast channel and the DMRS by at least one of the PSS and the SSS of the same SS block.

9. The method of Claim 8, wherein the DMRS are transmitted for the UE (510) to demodulate the broadcast channel.

10. The method of Claim 9, wherein the processor (522) of the network apparatus (520) schedules the broadcast channel and the DMRS in a plurality of sub-carriers and a plurality of orthogonal frequency-division multiplexing, OFDM, symbols of the SS block.

11. The method of Claim 8, wherein the processor (522) of the network apparatus (520) separates the PSS and the SSS of the same SS block by one orthogonal frequency-division multiplexing, OFDM, symbol.

## Patentansprüche

1. Verfahren, umfassend:
Empfangen (610), durch einen Prozessor (512) einer Vorrichtung (510), eines Synchronisierungssignalblocks, SS-Block, von einer Netzwerkvorrichtung (520);
Erfassen, durch den Prozessor (512) der Vorrichtung (510), eines Sendestrahls der Netzwerkvorrichtung (520) gemäß dem SS-Block; und
wobei der SS-Block ein erstes Synchronisierungssignal, ein zweites Synchronisierungssignal, Referenzsignale und einen Rundfunkkanal für ein Erfassen des Sendestrahls aufweist;
wobei das erste Synchronisierungssignal ein Primärsynchronisierungssignal, PSS, ist, das zweite Synchronisierungssignal ein Sekundärsynchronisierungssignal, SSS, ist und die Referenzsignale Demodulationsreferenzsignale, DMRS, sind;
**dadurch gekennzeichnet, dass**
zwei Orthogonal-Frequenzmultiplex-, OFDM-, Symbole, die durch den Rundfunkkanal und die DMRS belegt sind, durch mindestens eins des PSS und des SSS des gleichen SS-Blocks getrennt sind.

2. Verfahren gemäß Anspruch 1, wobei die DMRS für eine Demodulation des Rundfunkkanals verwendet werden.

3. Verfahren gemäß Anspruch 2, wobei der Rundfunkkanal und die DMRS eine Mehrzahl von Unterträgern und eine Mehrzahl von Orthogonal-Frequenzmultiplex-, OFDM-, Symbolen des SS-Blocks belegen.

4. Verfahren gemäß Anspruch 1, wobei das PSS und das SSS des gleichen SS-Blocks durch ein Orthogonal-Frequenzmultiplex-, OFDM-, Symbol getrennt werden.

5. Verfahren gemäß Anspruch 1, wobei das Erfassen des Sendestrahls der Netzwerkvorrichtung (520) weiter umfasst:
Erfassen (620), durch den Prozessor (512) der Vorrichtung (510), des ersten Synchronisierungssignals und des zweiten Synchronisierungssignals in einer Anfangsakquisitionsprozedur.

6. Verfahren gemäß Anspruch 1, wobei das Erfassen des Sendestrahls der Netzwerkvorrichtung (520) weiter umfasst:
Ausführen (630), durch den Prozessor (512) der Vorrichtung (510), einer Strahlmanagementprozedur gemäß den Referenzsignalen,
wobei das Ausführen (630) der Strahlmanagementprozedur weiter umfasst:
Messen, durch den Prozessor (512) der Vorrichtung (510), einer Kanalqualität basierend auf den Referenzsignalen.

7. Verfahren gemäß Anspruch 6, wobei das Ausführen (630) der Strahlmanagementprozedur weiter umfasst:
Wechseln, durch den Prozessor (512) der Vorrichtung (510), von Empfangsstrahlen, um die Referenzsignale in dem SS-Block zu messen.

8. Verfahren, umfassend:
Senden (710), durch einen Prozessor (522) einer Netzwerkvorrichtung (520), eines Synchronisierungssignalblocks, SS-Block, in einem Sendestrahl an eine Teilnehmerausrüstung (510), UE; und
Wechseln (720), durch den Prozessor (522) der Netzwerkvorrichtung (520), des Sendestrahls, um einen nächsten SS-Block zu senden,
wobei der SS-Block ein erstes Synchronisierungssignal, ein zweites Synchronisierungssignal, Referenzsignale und einen Rundfunkkanal für ein Erfassen des Sendestrahls durch die UE (510) aufweist;
wobei das erste Synchronisierungssignal ein Primärsynchronisierungssignal, PSS, ist, das zweite Synchronisierungssignal ein Sekundärsynchronisierungssignal, SSS, ist und die Referenzsignale Demodulationsreferenzsignale, DMRS, sind;
**dadurch gekennzeichnet, dass**
der Prozessor (522) der Netzwerkvorrichtung (520) zwei Orthogonal-Frequenzmultiplex-, OFDM-, Symbole, die durch den Rundfunkkanal und die DMRS belegt sind, durch mindestens eins des PSS und des SSS des gleichen Blocks trennt.

9. Verfahren gemäß Anspruch 8, wobei die DMRS für ein Demodulieren des Rundfunkkanals durch die UE (510) gesendet werden.

10. Verfahren gemäß Anspruch 9, wobei der Prozessor (522) der Netzwerkvorrichtung (520) den Rundfunkkanal und die DMRS in einer Mehrzahl von Unterträgern und einer Mehrzahl von Orthogonal-Frequenzmultiplex-, OFDM-, Symbolen des SS-Blocks zeitlich plant.

11. Verfahren gemäß Anspruch 8, wobei der Prozessor (522) der Netzwerkvorrichtung (520) das PSS und das SSS des gleichen SS-Blocks durch ein Orthogonal-Frequenzmultiplex-, OFDM-, Symbol trennt.

## Revendications

1. Procédé, comprenant le fait :
de recevoir (610), par un processeur (512) d'un appareil (510), un bloc de signal de synchronisation, bloc SS, à partir d'un appareil de réseau (520) ;
de détecter, par le processeur (512) de l'appareil (510), un faisceau de transmission de l'appareil de réseau (520) selon le bloc SS ; et
dans lequel le bloc SS comprend un premier signal de synchronisation, un deuxième signal de synchronisation, des signaux de référence et un canal de diffusion pour détecter le faisceau de transmission ;
dans lequel le premier signal de synchronisation est un signal de synchronisation primaire, PSS, le deuxième signal de synchronisation est un signal de synchronisation secondaire, SSS, et les signaux de référence sont des signaux de référence de démodulation, DMRS ;
**caractérisé en ce que**
deux symboles de multiplexage par répartition orthogonale de la fréquence, OFDM, occupés par le canal de diffusion et les DMRS sont séparés par au moins l'un du PSS et du SSS du même bloc SS.

2. Procédé de la revendication 1, dans lequel les DMRS sont utilisés pour la démodulation du canal de diffusion.

3. Procédé de la revendication 2, dans lequel le canal de diffusion et les DMRS occupent une pluralité de sous-porteuses et une pluralité de symboles de multiplexage par répartition orthogonale de la fréquence, OFDM, du bloc SS.

4. Procédé de la revendication 1, dans lequel le PSS et le SSS du même bloc SS sont séparés par un symbole de multiplexage par répartition orthogonale de la fréquence, OFDM.

5. Procédé de la revendication 1, dans lequel la détection du faisceau de transmission de l'appareil de réseau (520) comprend en outre le fait :
de détecter (620), par le processeur (512) de l'appareil (510), le premier signal de synchronisation et le deuxième signal de synchronisation dans une procédure d'acquisition initiale.

6. Procédé de la revendication 1, dans lequel la détection du faisceau de transmission de l'appareil de réseau (520) comprend en outre le fait :
de réaliser (630), par le processeur (512) de l'appareil (510), une procédure de gestion de faisceau selon les signaux de référence,
dans lequel la réalisation (630) de la procédure de gestion de faisceau comprend en outre le fait :
de mesurer, par le processeur (512) de l'appareil (510), une qualité de canal sur la base des signaux de référence.

7. Procédé de la revendication 6, dans lequel la réalisation (630) de la procédure de gestion de faisceau comprend en outre le fait :
de changer, par le processeur (512) de l'appareil (510), des faisceaux de réception pour mesurer les signaux de référence dans le bloc SS.

8. Procédé, comprenant le fait :
de transmettre (710), par un processeur (522) d'un appareil de réseau (520), un bloc de signal de synchronisation, bloc SS, dans un faisceau de transmission à un équipement utilisateur (510), UE ; et
de changer (720), par le processeur (522) de l'appareil de réseau (520), le faisceau de transmission pour transmettre un bloc SS suivant,
dans lequel le bloc SS comprend un premier signal de synchronisation, un deuxième signal de synchronisation, des signaux de référence et un canal de diffusion pour que l'UE (510) détecte le faisceau de transmission ;
dans lequel le premier signal de synchronisation est un signal de synchronisation primaire, PSS, le deuxième signal de synchronisation est un signal de synchronisation secondaire, SSS, et les signaux de référence sont des signaux de référence de démodulation, DMRS ;
**caractérisé en ce que**
le processeur (522) de l'appareil de réseau (520) sépare deux symboles de multiplexage par répartition orthogonale de la fréquence, OFDM, occupés par le canal de diffusion et les DMRS par au moins l'un du PSS et du SSS du même bloc SS.

9. Procédé de la revendication 8, dans lequel les DMRS sont transmis pour que l'UE (510) démodule le canal de diffusion.

10. Procédé de la revendication 9, dans lequel le processeur (522) de l'appareil de réseau (520) programme le canal de diffusion et les DMRS dans une pluralité de sous-porteuses et une pluralité de symboles de multiplexage par répartition orthogonale de la fréquence, OFDM, du Bloc SS.

11. Procédé de la revendication 8, dans lequel le processeur (522) de l'appareil de réseau (520) sépare le PSS et le SSS du même bloc SS par un symbole de multiplexage par répartition orthogonale de la fréquence, OFDM.
